Europäisches Patentamt

(19) European Patent Office

Office européen des brevets

(11) Publication number: **0 111 467**
**A2**

# (12) EUROPEAN PATENT APPLICATION

(21) Application number: 83850332.4

(22) Date of filing: 14.12.83

(51) Int. Cl.³: **A 01 K 1/015**
**D 06 M 11/04, C 09 K 3/32**

(30) Priority: 14.12.82 SE 8207156

(43) Date of publication of application:
20.06.84 Bulletin 84/25

(84) Designated Contracting States:
BE CH DE FR GB IT LI NL SE

(71) Applicant: Papyrus Kopparfors AB
Privatvägen 16
S-431 23 Mölndal(SE)

(72) Inventor: Ericsson, Thomas
Posthornsgatan 3
S-431 36 Mölndal(SE)

(72) Inventor: Gylfe, Sten
Furuvägen 44
S-775 00 Krylbo(SE)

(74) Representative: Grahn, Thomas et al,
Oscar Grahn Patentbyra AB Erik Lindquist Patentbyra AB
P.O. Box 7355
S-103 90 Stockholm(SE)

(54) Absorption agents for aqueous liquids and having low inherent fire hazard.

(57) The invention relates to an absorption agent for water-based liquids and having low fire risk, and is characterized in that it is a composite material essentially constisting of cellulose fibres which have been made hydrophilic and have adhered to them inorganic material to an extent of 15-50% by weight of the agent, 0,5-10% by weight of the inorganic material being a precipitation (flocculation) chemical conventionally used in waste water purification. The fibres suitably consist of mechanical, chemi-mechanical or semi-chemical fibres, sulphate or sulphite fibres, preferably reject fibres from the paper and paperboard industry. The inorganic material is preferably a material conventionally used as stock and/or coating filler and is of the type kaolin (clay), talcum, chalk (calcium carbonate) or diatomaceous earth. The absorption agent may be used for taking up spilled or waste liquids in shops, hospitals, dairies and slaughter houses and for taking up urine from pets and in latrines, the agent also having a neutralizing and deodorizing action. After use in latrines, the used absorption agent is an excellent composting material.

EP 0 111 467 A2

Absorption agents for aqueous liquids and having low
inherent fire hazard.
_____

The present invention relates to an absorption agent with
inherent very low fire risk, for water-based liquids.

In many different environments such as those in industry,
public administration, leisure time activities, keeping
pets, and in shops there is often the problem of spilled
or waste liquid, and in such cases there is a great need
for having available a rapidly acting, effective and convenient absorption agent. Spilled or waste liquid in the
environments mentioned is generally water-based, e.g.
milk, soft drinks, beer, juice etc. in shops, blood and
water in hospitals and slaughter houses, milk products in
dairies, and urine from pets and in latrines in domestic
environments.

Different types of absorption material are used in the
mentioned environments at present. Sawdust is sometimes
used in shops as an absorption agent. However, since its
cleaning  ability is poor and both customers and staff
help to spread out sawdust sprinkled out in one part of
the shop floor over the whole of the floor area, spilled
liquid is usually mopped up with a rag, which is not always regarded as particularly agreeable by the person
having to perform this task. In many cases there is a
great demand for a material having good absorption properties. In slaughter houses, hospitals and dairies there
is today no quick-acting, effective and convenient absorption agent, which also has a low fire risk.

In homes with pets such as cats, hamsters and mice, different absorption agents are used for litter today. Sand
was used earlier for cats, but at present the absorption
agents dominating the market are based on clay (inorganic
material). The disadvantage with inorganic material is

0111467

partly that there is a smell of urine after a short period of use, and partly that it has a high specific weight, which is not unimportant in this connection, when it is a question of carrying home from the shop a bag containing 15-30 litres of absorption agent.

At present there is no well-functioning absorption agent for latrines. Another important area where an absorption agent is lacking is where water-based vegetable fats have to be taken care of, it being necessary here to prevent the fat from becoming rancid when the used absorption agent is allowed to remain, in place e.g. on a floor for some time.

From what has been said above it will be apparent that there is a great need for a rapidly acting, effective and convenient absorption agent for water-based liquids. The absorption agents on the market which are intended for oil, such as the one sold under the trade mark name ALFOB, are based on hydrophobic wood fibre material blended with an inorganic material. This type of absorption agent has not been found to meet the demands placed on it in the present connection, since its absorption affinity to water is low, while at the same time the rate at which it absorbs water is very low, which is more or less general in respect of hydrophobic material.

The object of the present invention is therefore to provide the market, user and consumer with a rapidly acting, effective and convenient absorption agent for water-based liquids, which may be used in many different fields where there is at present no effective such agent, or where the one used is not satisfactory. Another object of the invention is to provide an absorption agent for water-based liquids contributing to a better working environment and better hygenic conditions.

0111467

More specifically, the invention relates to an absorption agent for water-based liquids, and is characterized in that it is a composite material essentially consisting of cellulose fibres which have been made hydrophilic and have inorganic material adhered to them, the latter constituting 15-50% per weight of the agent, and 0.5-10% by weight of the inorganic material being a precipitation (flocculation) chemical conventionally used in waste water purification.

The cellulose fibres in the absorption agent in accordance with the invention suitably comprise mechanical, chemi-mechanical, semi-chemical, sulphate or sulphite fibres or mixtures thereof. Reject fibres from the paper and paperboard industry are particularly perferred. The inorganic material included in the claimed absorption agent is perferably an inorganic material conventionally used in paper or paper board manufacture as stock and/or coating filler, and includes such as kaolin (clay), talcum, chalk (calcium carbonate) or diatomaceous earth but can also be other materials as well, of course.

The precipitation chemical is a conventional flocculation chemical used in the so-called chemical stage in waste water purification plants. As example, mentioned can be made of AVR (iron-containing aluminium sulphate), ferric chloride ($FeCl_3$), sodium tripolyphosphate and pure aluminium sulfate. A preferred precipitation chemical is AVR from Boliden having the following analysis:

| | |
|---|---|
| Particle size | 1-3 mm |
| Al | 7% ($Al_2(SO_4)_3 : 16-17\ H_2O$) |
| Fe | 3% ($Fe_2(So_4)_3 \cdot 9\ H_2O$) |
| Sulphuric acid deficit | 2% |

| | |
|---|---|
| Water-insoluble material | 2,5% silicate mineral |
| Active substance | 3,2 moles/kg |
| Alum content | about 95% |

The proportions of hydrophobic cellulose fibres and inorganic material may be varied according to the intended field of use. There are several advantages with the composite material in accordance with the invention, compared with a material consisting of 100% of wood fibres. The inorganic material, apart from providing low fire risk, also gives weight to the absorption agent, which improves handling. The composite material is also not so airy and fluffy, due to the admixture of the inorganic material, resulting in good contact being achieved between the cellulose fibres and the liquid which is to be absorbed, which gives better absorption. An absorption agent consisting solely of inorganic material has, apart from its being extremely heavy for the consumer to handle and transport, a very much poorer absorption ability and a lower rate of absorption compared with the agent in accordance with the invention. The composite material in accordance with the present invention, consisting of cellulose fibres which have been made hydrophobic and which have inorganic material adhered to the fibres is therefore extremely well optimalized in every respect.

An important property of the absorption agent in accordance with the invention is that it has a very low fire risk. This is of course a very great advantage, since obviously it is not desirable to sprinkle out material increasing the risk of fire in shops, for example. This highly distinctive effect of the claimed composite material would appear to be dependant on the inorganic phase containing the precipitation chemical and being firmly adhered to the organic fibre phase. An inorganic material proportion of 25 % or more in the composite material results in that it only glows when tested with the flame from a blowlamp, and the glow is extinguished when the flame is removed, thus the fire retardent properties of the claimed absorption agent do not increase the fire risk in the environment where it is used. A purely physical blend of cellulose material and inorganic material does not give the same fire protection as the composite material according to the invention, which has been established in comparative tests.

An important distinguishing feature of the claimed absorption agent is that the cellulose fibres included therein have been made hydrophilic. A particularly preferred emodiment of the absorption agent in accordance with the invention is a composite material, where the cellulose fibres have been made hydrophilic with the aid of a conventional wetting agent, preferably a tenside, at a concentration of 0.5-3 % by weight calculated on the absorption agent. A tenside of the polyethylene glycol ether type is particularly perferred, e.g. a product sold under the trade mark name TRITON X-45. The hydrophilic effect may also be achieved in other conventional ways.

According to the intended field of use, the claimed absorption agent may contain different additives. The agent may thus contain a neutralizing material, e.g. slaked lime, bicarbonate, chalk, talcum and/or lye, when it is intended to be used for absorbing such as urine and other acidic liquids. The neutralizing material is added in an amount such that the pH of the absorption agent will be between 7.5 and 8.5. A suitable additive is, for exampel, about 5% by weight of slaked lime and/or bicarbonate.

The claimed absorption agent can also contain chemical preparations preventing anaerobic reactions in use, e.g.

in latrines. An example of such a preparation is calcium nitrate. Deodorants or odor damping agents can also be added, such as perfume.

An antioxidant can also be included in the absorption agent in accordance with the invention, with the object of preventing rancidity in the absorbed water-based liquids. The antioxidant is suitably ascorbic acid, citric acid, phosphoric acid, or tartaric acid.

In certain fields of use, for preventing the formation of ammonia coming from amino-acids, it is suitable to add to the absorption agent a chemical preparation such as phosphate to prevent such ammonia formation.

According to one embodiment of the invention, an absorption agent intended for use in connection with latrines contains plant nutrients, e.g. phosphorus, nitrogen and potassium, which accelerate the microbiological decomposition, and this effect can be further reinforced by the addition of bio sludge.

The absorption agent may also contain, in addition to the precipitation chemical acting as a binder between the organic and inorganic phase, a binder for the purpose of further adhering the hydrophilic cellulose fibres to the inorganic phase, the binder being one conventionally used in the paper and paperboard industry and of a type such as starch, latex, and/or polymine.

The starting raw material for the absorption agent in accordance with the invention can be obtained from sedimentation, biological and/or chemical sludge treatment steps in the paper and paperboard industry. The sediment or sludge obtained, which contains cellulose fibres and the inorganic material, is treated with the required additives, which are selected in accordance with the intended field or use. Final adjustment of the content of binder and/or inorganic material is made at this stage, since the contents thereof may vary depending on the product and process variations. At this stage there is usually also added the agent used to make the fibres hydrophilic, in as far as this is necessary due to low retention or adherence. Shredding and drying of the product to a dry content of 90-95% then take place.

The raw material of the absorption agent in accordance with the invention can also come from paper and paper board broke, which may be obtained from the dissolved broke systems in the paper and paperboard industries. It may thus consist of sheet waste, strips, side-runs etc. from converter plant or from return paper/paperboard, e.g. coming from collection services in densely populated areas, this material being slurried in conventional slurrying apparatus, and then treated in the same way as the sediment and sludge mentioned above.

The raw material for the absorption agent in accordance with the invention can furthermore be obtained by mixing cellulose fibres and the organic material, which are then adhered together with a conventional binder used in paper and paperboard industry, this binder being of the type starch, latex etc. The cellulose fibres may be newly manufactured according to conventional methods or may be obtained as reject fibres from mechanical, chemi-mechanical or semi-chemical pulping processes, or sulphate or sulphite pulping processes.

The absorption agent in accordance with the invention ca be present in granular or shredded form, or in the form of a mat.

A particularly preferred absorption agent according to the invention consists of about 70% by weight of cellulose fibres which have been made hydrophilic by the addition of a tenside and about 30% by weight of inorganic material adhered to the cellulose fibres with the precipitation chemical AVR conventionally used in waste water purification, the precipitation chemical being 0,5-10% by weight of the inorganic material. Such an absorption agent is manufactured by mixing sediment (sludge) from the presedimentation step of the purification plant of a paperboard industry, with sediment (sludge) from the chemical purification step (so-called chemical sludge). For further details, cf Example 1.

The invention will now be described in detail with the aid of the follwing Examples.

Example_1
Absorption agent for shops, hospitals slaughter houses etc._____

A preferred absorption agent according to the invention was prepared in the following way: The waste water from two paperboard machines, groundwood mill and (C) TMP, was purified conventionally by first passing the waste water to a coarse screen and then to a sedimenation tank (A). The sediment (A) from this tank contained about 80% by weight cellulose fibres and about 20% by weight inorganic material mostly kaolin. The supernantant liquor from the sedimentation tank was pumped to a conventional biological bed where a bio sludge was obtained upon aeration, settlement and thickening. The supernatant liquor from the bio step was pumped to the chemical purification step where AVR was added as a precipitation chemical (flocculation agent). The flocks formed were transferred to a second sedimentation tank (B) and were there thickened by settlement. The supernatant liquor from this settlement was micro-screened and the clear filtrate obtained was pumped to the recepient. The sediment from the sedimentation tank (B) and from the micro-screens were collected and thickened to a so-called chemical sludge containing almost solely inorganic material.

Sediment A and the chemical sludge were mixed in such proportions so that the mixture obtained contained about 70% by weight cellulose fibres (in this case a mixture of sulphate fibres and mechanical fibres) and about 30% inorganic material where the major part was kaolin and from 20 to 40% by weight were chemical sludge containing AVR (the content of AVR was about 5% by weight of the inorganic material.) The mixture was treated with 3% by weight of a conventional tenside (Genapol X080 made by Hoechst). The mixture then obtained was pressed in a conventional press to a dry content of 35-40%. The material was then passed through a shredder, so that a suitable size was obtained for the final product. The product was finally dried in a conventional rotary drum drier to a dry content of 92-95%.

During practical use in a grocery shop, the absorption agent obtained was found to have very rapid and effective absorption ability.

The amount of tenside used to obtain a hydrophilic product is dependant, inter alia, on what type of tenside is used (cationic, non-ionic, anionic), since different degrees of retention are obtained with the different materials.

0111467

Example 2

Example 1 was repeated, but with the difference that the
mixture was treated with a polyethylene glycol ether tenside, sold under the name TRITON X-45 (octylphenoxy
polyethoxy etanol with 5 mol ethylene oxide). In practical use, the absorption agent obtained was found to
absorb water very rapidly, as well as sugar solutions and
syrup solutions, fats and oils.

Example_3

Example 2 was repeated, but with the difference that the
raw material was paperboard broke taken from a broke tower. The properties of the absorption agent obtained were
the same as in Exampel 2.

Example_4

Absorption_agent_for_taking_up_urine,_e.g._from_cats._

This agent was produced in the same way as Example 1, but
with a further addition of about 5% by weight of slaked
lime and/or bicarbonate.

In practical use of the obtained absorption agent, it was
found that the odor did not occur, even after it had been
used for a week as cat litter. This result is sensational, since the materials used today begin to smell after
2-3 days' use.

When an absorption agent is used as cat litter and the
like, it is very desirable that the material is not too
light, since if it is it easily fastens to the paws of
the animal. The claimed absorption agent meets the requirement of not fastening in animals' paws, particularly if
it contains 30-50% by weight of inorganic material, preferably kaolin, the remainder being cellulose fibres which have been made hydrophilic.

In comparision of the product according to this example with cat litter based on clay (100 % inorganic material) it has been found that a seven-litre package of conventional cat litter weighs 4-4.5 kg while seven litres of the claimed absorption agent only weigh about 1.8 kg, but with the same or improved absorption capacity.

Example 5 Absorption agent for use in latrines

This was produced in the same way as in Example 4 but with an addition of calcium nitrate, which was sprayed on to the pressed material before drying. The agent also contained additions of potassium, nitrogen and phosphorus.

The calcium nitrate prevents the occurrance of anaerobic reactions, which always take place at the bottom of a latrine bucket. The addition of phosphate also enables preventing the formation of ammonia from amino-acids included in the urine. Practical tests have given very promising results.

The agent absorbs the urine, of course, which results in less odor and also very much better working environment for the personnel concerned with emptying, which has also been confirmed in large field investigations. After use, the absorption agent together with the waste with which it was used was composed, and the result has been found to be an excellent fertilizer.

Comparative Example A

The absorption agent according to Example 4 was strewn to a height of 1.5-2 cm in a cat box (A) with a bottom area of 30 x 40 cm. In another cat box (B), an absorption agent consisting of 70 % by weight of hydrophobic cellulose fibres and 30 % kaolin was strewn out to the same height. Cats were subsequently allowed to use both boxes, and it was noted that in box A all the urine was absorbed by the absorption agent and no urine could be seen at the bottom of the box. In box B, with the hydrophobic material, it was found that the major portion of the urine was at the bottom of the box, and that the absorption agent more or less floated on the urine. After 24 hours, the odor from box A was unremarkable, whereas in box B it was extremely noticable.

Comparative_Example_B

A sample (sample 1) was produced by mixing 56% by weight of groundwood pulp, 14% by weight of pine sulphate pulp and 30% by weight of kaolin. The obtained suspension was dewatered on a Büchner funnel before drying. The ash content of the material after 1 hour at $1000^{\circ}$ C was 29% by weight. A second sample (sample 2) was produced in the same way but contained 48% by weight of groundwood pulp, 12% by weight of pine sulphate pulp, and 40% by weight of kaolin. Its ash content was 42% by weight.

An absorption agent was also produced according to Example 1 (sample 3). Its ash content was 32% by weight. A still further sample (sample 4) was produced according to Example 4, its ash content was 35% by weight.

Combustion_Test.

Each sample was formed into a pile having a height of 5 cm and a base of about 10 cm. The flame from a bunsen burner was allowed to play on the samples for 20 seconds. The following was observed on removal of the burner:

Sample 1: Open flames for 6 minutes. All the material was turned into ash.

Sample 2: Open flames for just over 5 minutes. About 70% of the material was turned into ash.

Sample 3: No open flames.

Sample 4: No open flames.

## CLAIMS

1. Absorption agent for water-based liquids and having low fire risk, c h a r a c t e r i z e d in that it is a composite material essentially consisting of cellulose fibres which have been made hydrophilic and which have adhered to them inorganic material, constituting 15-50% by weight of the agent, 0,5-10% by weight of the inorganic material being a precipitation (flocculation) chemical conventionally used in waste water purification.

2. Agent as claimed in claim 1, c h a r a c t e r - i z e d in that the precipitation chemical is AVR (iron-containing aluminium sulphate) ferric chloride (FeCl ) or pure aluminium sulfate.

3. Agent as claimed in claim 1 or 2, c h a r a c t e r - i z e d in that the cellulose fibres comprise mechanical, chemi-mechanical or semi-chemical fibres or sulphate or sulphite fibres or mixtures thereof, preferably reject fibres from the paper and paperboard industry.

4. Agent as claimed in claim 3, c h a r a c t e r - i z e d in that the cellulose fibres have been made hydrophilic in a way known per se, e.g. by a wetting agent, preferably a tenside, particularly a polyethylene glycol ether.

5. Agent as claimed in claim 1, c h a r a c t e r - i z e d in that the inorganic material is a stock and/or coating filler conventionally used in paper and paperboard manufacture, e.g. kaolin (clay), talcum, chalk (calcium carbonate) or diatomaceous earth.

6. Agent as claimed in any of claims 1-5, for absorbing acidic liquids, e.g. urine, c h a r a c t e r i z e d in that it further contains a neutralizing material, e.g. slaked lime, bicarbonate, chalk, talcum or lye or mixtures thereof.

7. Agent as claimed in any of claims 1-6, for use with such as latrines, c h a r a c t e r i z e d in that it further contains chemical preparations inhibiting anaerobic reactions, and in that it also contains scenting agents.

8. Agent as claimed in claim 1, c h a r a c t e r - i z e d in that it further contains an antioxidant preventing the absorbed liquid from becoming rancid, the antioxidant being such as ascorbic acid, citric acid, phosphoric acid, or tartaric acid.

9. Agent as claimed in any of claims 1-8, c h a r a c- t e r i z e d in that it furthermore contains a chemical preparation preventing the formation of ammonia coming from amino acids.

10. Agent as claimed in claim 1, c h a r a c t e r- i z e d in that it also contains nutrients for plants, these nutrients being such as phosphorus, nitrogen and potassium.